# EUROPEAN PATENT SPECIFICATION

(11) **EP 2 812 590 B1**
(45) Date of publication and mention of the grant of the patent: **10.02.2016**
(21) Application number: 12705242.1
(22) Date of filing: 10.02.2012
(51) Int. Cl.: F16C 11/06

(54) **BOOT SEAL WITH SLIDING RING FOR SPHERICAL PLAIN BEARING**
MUFFENDICHTUNG MIT GLEITRING FÜR KUGELFÖRMIGES GLEITLAGER
MEMBRANE D'ÉTANCHÉITÉ DOTÉE D'UNE BAGUE COULISSANTE DESTINÉE À UN PALIER LISSE SPHÉRIQUE

(43) Date of publication of application: 17.12.2014
(73) Proprietor: Schaublin SA, 2800 Delemont (CH)
(72) Inventor: CHARMILLOT, Philippe, CH-2832 Rebeuvelier (CH)
(74) Representative: Israelsson, Stefan
(86) International application number: PCT/EP2012/052326
(87) International publication number: WO 2013/117238

(56) References cited:
- DE-A1- 10 256 334
- DE-A1- 19 834 677
- DE-U1- 8 309 873
- DE-U1-202004 017 767
- GB-A- 2 400 149
- US-A- 4 052 804
- US-A1- 2004 028 302
- US-B1- 6 350 075

## Description

### Technical Field

The present invention relates generally to spherical plain bearings and, more particularly, to a spherical plain bearing having a slidable boot seal.

### Background

Spherical plain bearings typically comprise a ball positioned for rotational movement in an outer race. The ball defines an outer surface, and the outer race defines an inner surface contoured to receive and retain the ball therein such that the outer surface of the ball is in sliding engagement with the inner surface. In some cases, a boot seal may be used to seal the interface of the ball and the outer race, thereby inhibiting the ingress of dirt, water, particulate matter, and other contaminants to the slidingly engaged surfaces. Such sealed spherical plain bearings are shown in DE 8 309 873 U1, GB 2 400 149 A and DE 102 56 334 A1.

Typically, the boot seal is stretched across the interface of the ball and the outer race. One edge of the boot seal is fixedly retained in a groove on the ball, and a second edge of the boot seal is fixedly retained in a groove on the outer race. In connecting the boot seal in this manner, the edges of the boot seal are non-movably fixed in place. Rotation of the ball in the outer race thereby causes the material of the boot seal to be stretched.

Upon repeated stretching of the boot seal, the materials from which the boot seal are fabricated may plastically reform over time. Such plastic deformation of the materials may result in a compromise of the boot seal, which may detrimentally affect the spherical plain bearing on which the boot seal is installed.

### Summary

In one aspect, the present invention resides in a spherical plain bearing assembly according to claim 1.

In another aspect, the present invention resides in a method of sealing a spherical plain bearing assembly according to claim 10.

In another aspect, the present invention resides in a steering assembly comprising a frame, a steering member and two hubs, all pivotally coupled to the frame, each of the hubs having a control arm projecting therefrom, a distal end of each of the control arms being pivotally coupled to the steering member by a respective tie rod and each of the hubs have a piston with one end pivotally coupled to the control arm and an opposing end pivotally coupled to the frame. The steering assembly also comprises a spherical plain bearing assembly according to claim 1.

### Brief Description of the Drawings

FIG. 1 is a cross sectional view of a bearing assembly having boot seals with sliding rings, in accordance with one embodiment of the present invention.
FIG. 2 is a cross sectional view of a portion of the bearing assembly shown in FIG. 1.
FIG. 3 is a cross sectional view of a portion of the bearing assembly of FIG. 1 showing the boot seal and sliding ring.
FIG. 4 is a perspective cutaway view of the sliding ring of the bearing assembly of FIG. 1.
FIG. 5 is a cross sectional view of a portion of an alternate embodiment of the bearing assembly of FIG. 1
FIG. 6 is a schematic representation of the bearing assembly of FIG. 1 installed in a steering system.

### Detailed Description

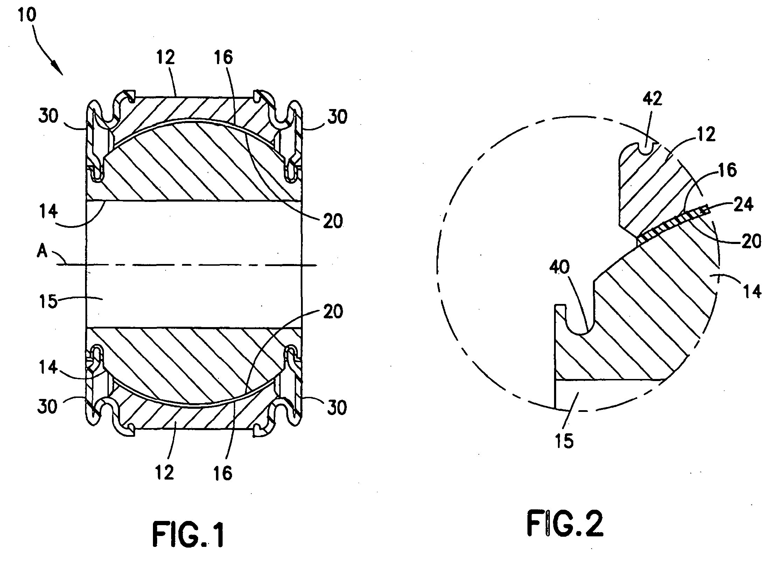

As shown in FIG. 1, a bearing assembly 10 comprising a spherical plain bearing is designated generally by the reference number 10 and is hereinafter referred to as "bearding assembly 10." The bearing assembly 10 includes an outer race 12 and ball 14 disposed therein. The ball 14 defines a bore 15 extending therethrough, the bore being located substantially concentrically about an axis A extending through the bearing assembly 10. The bore 15 is adapted to receive a portion of a shaft or other component therein. The present invention is not so limited, as the ball 14 may be integral with or form part of a shaft or other component. Moreover, while the bore 15 is shown and described as extending completely through the ball 14, the present invention is not limited in this regard as the bore may extend only part-way through the ball.

In the illustrated embodiment, the outer race 12 is a ring that defines an inner surface 16 having a spherically concave contour. The inner surface 16 is contoured to receive a spherically convex contoured surface 20 of the ball 14. The inner surface 16 of the outer race 12 is in sliding disposition to the spherically convex contoured surface 20 of the ball 14. The ball 14 and the outer race 12 are rotatable relative to each other. Rotation of the ball 14 in the outer race 12 may also allow a shaft coupled to or extending through the ball to be misaligned relative to the axis A. While the outer race 12 has been shown and described as being a ring, the present invention is not limited in this regard as the outer race can assume any practical shape or be part of another component, such as, for example a housing, without departing from the broader aspects of the invention.

The bearing assembly 10 includes a boot seal 30 (hereinafter "seal 30") positioned across the interface of the outer race 12 and the ball 14 to inhibit the ingress of debris and contaminants into the bearing assembly 10, and more specifically to the sliding surfaces defined by the spherically convex contoured surface 20 and the inner surface 16. The bearing assembly 10 may include two seals 30 as shown, each seal being located on opposing sides of the bearing assembly.

The ball 14 may be made from a steel or other metallic based alloy including, but not limited to, aluminum, titanium, nickel, copper, cobalt, and the like. For example, the ball 14 may be made from AISI 52100, AISI 440C, 4340 or 4130 alloy steel, 17-4PH, 15-5PH, or 13PH-8MO. It is also contemplated that the ball 14 may be made from other materials that are sufficiently hard or can be sufficiently hardened through heat treatment or surface treatment. The ball 14 may also be chrome plated.

The outer race 12 may be made from a steel or an alloy steel, including, but not limited to, 4340, 4130, 17-4PH, 15-5PH, or 13PH-8MO, or another suitable material. It is also contemplated that the outer race 12 may be made of a material that provides for a sufficient mating surface for either a self-lubricating coating composition on the contoured surface of the ball 14, or for a greased metal-on-metal bearing. The outer race 12 and the ball 14 may be made of the same or different materials.

As shown in FIG. 2, a first annular groove 40 extends circumferentially around a defining edge of the bore 15 extending through the ball 14. A second annular groove 42 extends about a circumference of the outer race 12 proximate an edge of the outer race. In the bearing assembly 10, the first annular groove 40 is substantially concentric with the second annular groove 42.

Also as shown in FIG. 2, the bearing assembly 10 can include a self-lubricating coating composition applied to the contoured surface of the ball 14 to form a lubricious liner 24. The present invention is not limited in this regard, however, as the lubricious liner 24 is optional. In embodiments employing the lubricious liner 24, the coating composition forming the lubricious liner 24 may be applied to one or more of the spherically convex contoured surface 20 of the ball 14 and the inner surface 16 of the outer race 12. In embodiments of the bearing assembly 10 in which the lubricious liner 24 is present, one or more of the spherically convex contoured surface 20 of the ball 14 and the inner surface 16 of the outer race 12 are generally treated to achieve a desired surface finish (e.g., via a grit-blasting operation). The surfaces are then cleaned and dried, and the coating composition is applied by a method such as, for example, spraying, spinning, dipping, injection, bonding, or the like. Once the self-lubricating coating composition is applied, the composition may be cured by any suitable method and subsequently machined to particularly desired measurements to form the lubricious liner 24.

The lubricious liner 24, when employed, is a fabric liner system that includes polytetrafluoroethylene (PTFE) fiber that may be woven with other fabrics, such as, but not limited to, cotton, polyester, glass fiber, carbon fiber, nylon, or aramid materials such as NOMEX^{®} and KEVLAR^{®} manufactured by DuPont. The fabric may then be set in a thermosetting resin or thermoplastic resin. The PTFE fibers may include chopped PTFE fibers in addition to the other fibers and resins.

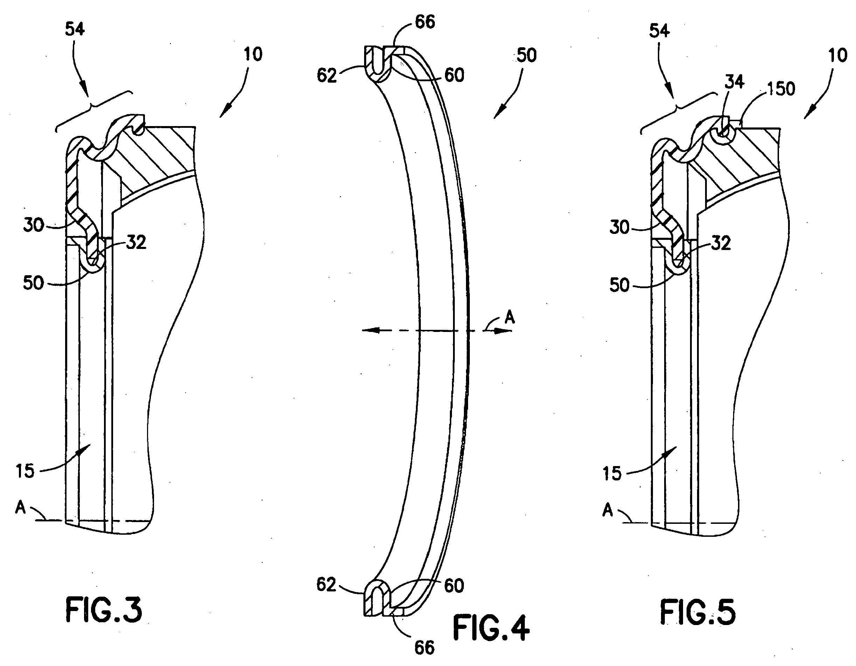

As shown in FIG. 3, the seal 30 is rotatable in the bearing assembly 10 via a sliding ring 50 positioned in the first annular groove 40 (FIG. 2) and coupled to a first edge 32 of the seal, the first edge being secured into the sliding ring in a friction fit. The sliding ring 50 slides in the first annular groove 40 with the seal 30, the sliding ring and the seal moving substantially in concert with each other. In doing so, resistant forces (e.g., friction) between the material of the seal 30 and the material of the ball 14 is eliminated, thereby avoiding excessive stretching of the seal material.

The second annular groove 42 (FIG. 2) receives the second edge 34 (FIG. 5) of the seal 30 in an interference fit. When the seal 30 is fitted in the annular grooves, the seal is rotatable relative to the ball 14 and is tensioned to provide a barrier that inhibits the ingress of debris and contaminants to the inner surface 16 of the outer race 12 and the spherically convex contoured surface 20 of the ball 14. The present invention is not limited to the receiving of the sliding ring 50 in the first annular groove 40 and the receiving of the second edge 34 in the second annular groove 42 in an interference fit, however, as a second sliding ring 150 (as shown in FIG. 5) may alternatively (or additionally) be received in the second annular groove 42 to enhance the rotatability of the seal 30.

The seal 30 defines a ring. The present invention is not limited in this regard, however, as the geometry of the seal 30 may vary depending on the geometry of the outer race 12, the ball 14, and the bearing assembly 10.

In the embodiments illustrated, material from which the seal 30 is fabricated is an elastomer. The seal 30 may be made from, for example, natural rubber, silicones, or other synthetic elastomer materials such as, for example, nitrile, urethane, polyurethane, and the like. The seal 30 is typically made from a material having a hardness value suitable for sealing and durability. The seal 30 may include a pleated section 54, as shown in FIG. 3. The pleated section 54 collapses and expands in response to the relative movement of the ball 14 and the outer race 12.

As shown in FIG. 4, the sliding ring 50 comprises a ring having a substantially U-shaped cross-sectional geometry defining a first leg 60 and a second leg 62. The sliding ring 50 may be split and fabricated from a material that is sufficiently flexible to allow the sliding ring to be opened and "snapped" into the first annular groove 40. The substantial U-shape of the sliding ring 50 allows the first leg 60 and the second leg 62 to capture the first edge 32 of the seal 30. As shown, the surface of the sliding ring 50 defining the first leg 60 of the U-shape includes a lip 66 protruding substantially perpendicularly therefrom. When the sliding ring 50 is positioned in the first annular groove 40, the lip 66 is positioned adjacent to a defining edge of the ball 14.

In the embodiments illustrated, the sliding ring 50 is made from a polymer. The present invention is not limited in this regard, as any material that allows the sliding ring 50 to slide in the first annular groove 40 may be used. The geometry of the sliding ring 50 is not limited to being substantially U-shaped in cross-section, as illustrated, as any suitable geometry (e.g., V-shaped, rectangular, or the like) can be employed.

As shown in FIG. 5, the bearing assembly 10 may incorporate a second sliding ring 150. In embodiments in which the second sliding ring 150 is incorporated, the second sliding ring is positioned in the second annular groove 42 and is coupled to the second edge 34 of the seal 30. The second sliding ring 150 is substantially the same as the sliding ring 50, namely, of a U-shaped cross sectional geometry having at least first and second legs. In incorporating the second sliding ring 150 into the bearing assembly 10, the second sliding ring slides in the second annular groove 42 substantially in concert with the seal 30 to eliminate resistant forces (e.g., friction) between the material of the seal 30 and the material of the ball 14, thereby avoiding excessive stretching of the seal material. The second sliding ring 150 is not limited to being used in a bearing assembly also incorporating the sliding ring 50, however, as the bearing assembly 10 may incorporate only the second sliding ring.

The bearing assembly 10 may be utilized in a variety of situations and applications, including, but not limited to, suspension systems and steering systems. In one embodiment, the bearing assembly 10 may be utilized in a suspension system of a vehicle and particularly a military vehicle, such as, for example, a tank or transport vehicle. The use of the bearing assembly 10 is not limited in this regard as it is contemplated to also be acceptable for use in other applications, such as heavy duty equipment, for example, heavy duty pick-up trucks, dump trucks, fire trucks, mining and construction equipment and vehicles, and the like.

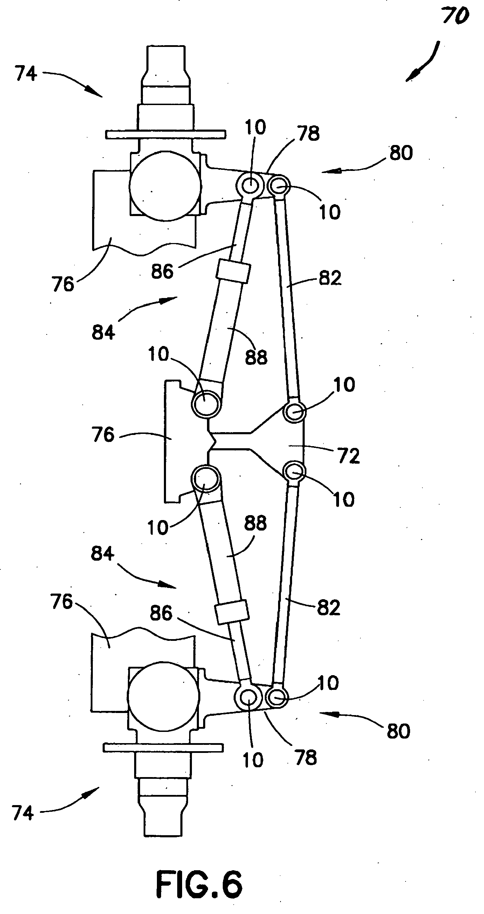

As shown in FIG. 6, a steering assembly 70 is shown having a steering member 72 and two hubs 74, all pivotally coupled to separate locations on a frame 76 of a vehicle. Each of the hubs 74 has a control arm 78 projecting therefrom. A distal end 80 of each of the control arms 78 is pivotally coupled to the steering member 72 by a tie rod 82. In addition, each of the hubs 74 has a piston 84 with one end pivotally coupled to a position adjacent the distal end 80 of the control arm 78 and an opposing end of the piston pivotally coupled to the frame 76. The pistons 84 each include a cylinder portion 86 slidingly disposed within a tube portion 88 so that the opposing ends can move towards and/or away from each other in response to forces applied thereto.

Each of the tie rods 82 and pistons 84 have the bearing assembly 10, described above, positioned in opposing ends thereof for providing the pivotal coupling with the frame 76, the control arm 78, and/or the steering member 72. The steering assembly 70 described herein has utility, for example, in off-highway heavy haul trucks which operate in conditions subject to excessive amounts of contamination. Use of the bearing assembly 10 extends the useful life of the steering assembly 70 of a heavy haul truck by improving lubrication and mitigating the potential for contaminants to enter the spherical bearing.

Although this invention has been shown and described with respect to the detailed embodiments thereof, it will be understood by those of skill in the art that various changes may be made and equivalents may be substituted for elements thereof without departing from the scope of the claims. In addition, modifications may be made to adapt a particular situation or material to the teachings of the invention without departing from the scope of the claims. Therefore, it is intended that the invention not be limited to the particular embodiments disclosed in the above detailed description, but that the invention will include all embodiments falling within the scope of the claims.

## Claims

1. A spherical plain bearing assembly (10), comprising:
a ball (14) having a first groove (40) located in an outer surface thereof;
an outer race (12) having an outer surface and an inner engagement surface (16), the inner engagement surface positioned on a portion of the outer surface of the ball (14) and contoured to a shape complementary to the outer surface of the ball (14) such that the outer surface of the ball (14) is slidably and rotatably engaged with the inner engagement surface (16), and the outer surface of the outer race (12) having a second groove (42) located therein, the first and second grooves being concentrically arranged; **characterised by**,
a first ring (50, 150) slidably located in one of the first groove (40) and the second groove (42), the first ring (50, 150) having a substantially U-shaped cross sectional geometry defined by a first leg (60) and a second leg (62), the first ring (50, 150) further comprising a lip (66) protruding substantially perpendicularly from one of the first leg (60) and the second leg (62); and
a seal (30) rotatable relative to the ball (14), the seal (30) having a first edge and a second edge, the first edge being captured in the first ring (50, 150) by the first leg (60) and the second leg (62), and the second edge being captured in the other of the first groove (40) and the second groove (42),
the first ring (50, 150) and the seal (30) moving substantially in concert with each other eliminating resistant forces between the seal (30) and the ball (14).

2. The spherical plain bearing assembly (10) of claim 1, further comprising a second ring (50, 150) slidably located in the other of the first groove (40) and the second groove (42), the second ring (50, 150) having a substantially U-shaped cross sectional geometry defined by a third leg (60) and a fourth leg (62);
wherein the second edge of the seal (30) is captured in the second ring (50, 150),
the second ring (50, 150) and the seal (30) moving substantially in concert with each other eliminating resistant forces between the seal (30) and the ball (14).

3. The spherical plain bearing assembly (10) of claim 1, further comprising a lubricious liner (24) disposed on one or more of the outer surface of the ball (14) and the inner surface of the outer race (12).

4. The spherical plain bearing assembly (10) of claim 1, wherein the first ring (50, 150) is split.

5. The spherical plain bearing assembly (10) of claim 1, wherein the first ring (50, 150) is made from a polymer.

6. The spherical plain bearing assembly (10) of claim 1, wherein the ball (14) is made from steel, aluminum, titanium, nickel, copper, or cobalt.

7. The spherical plain bearing assembly (10) of claim 1, wherein the outer race (12) is made from a steel or alloy steel.

8. The spherical plain bearing assembly (10) of claim 1, wherein the seal (30) is made from a material selected from the group consisting of natural rubber, silicone, nitrile, urethane, and polyurethane.

9. The spherical plain bearing assembly (10) of claim 1, wherein the seal (30) is pleated.

10. A method of sealing a spherical plain bearing assembly (10), comprising the steps of:
providing a spherical plain bearing having an outer race (12) and a ball (14) disposed in the outer race (12), the ball and the outer race being rotatable relative to each other, the ball (14) having a first groove (40) therein, and the outer race (12) each having a second groove (42) therein, the first and second grooves being concentrically arranged;
providing a seal (30) having a first edge and a second edge;
providing a first sliding ring (50, 150) in one of the first groove (40) and the second groove (42), the first ring (50, 150) having a substantially U-shaped cross sectional geometry defined by a first leg (60) and a second leg (62), the first ring (50, 150) further comprising a lip (66) protruding substantially perpendicularly from one of the first leg (60) and the second leg (62);
securing the first edge of the seal (30) between the first leg (60) and the second leg (62) of the first sliding ring (50, 150) and providing for rotation of the seal (30) relative to the ball (14);
providing for movement of the first ring (50, 150) substantially in concert with the seal (30) eliminating resistant forces between the seal (30) and the ball (14); and
fitting the second edge of the seal (30) to the other of the first groove (40) and the second groove (42).

11. The method of claim 10, wherein the step of fitting the second edge of the seal (30) to the other of the first groove and the second groove comprises:
providing a second sliding ring (50, 150) in the other of the first groove (40) and the second groove (42), the second ring (50, 150) having a substantially U-shaped cross sectional geometry defined by a third leg (60) and a fourth leg (62);
securing the second edge of the seal (30) to the second sliding ring (50, 150), and
providing for movement of the second ring (50, 150) substantially in concert with the seal (30) eliminating resistant forces between the seal (30) and the ball (14).

12. The method of claim 10, further comprising depositing a self-lubricating coating composition on one or more of the ball (14) and the outer race (12).

13. A steering assembly (70), comprising:
a frame (76);
a steering member (72) and two hubs (74), all pivotally coupled to the frame (76), each of the hubs having a control arm (78) projecting therefrom, wherein a distal end (80) of each of the control arms is pivotally coupled to the steering member (72) by a respective tie rod (82) and each of the hubs (74) have a piston (84) with one end pivotally coupled to the control arm (78) and an opposing end pivotally coupled to the frame (76);
a spherical plain bearing assembly (10) according to claim 1 disposed in opposing ends of each of the tie rods (82) and the pistons (84), for providing the pivotal coupling with at least one of the frame (76), the control arm (78), and the steering member (72).

## Patentansprüche

1. Kugelförmige Gleitlageranordnung (10), umfassend:
eine Kugel (14), die eine erste Nut (40) aufweist, die sich in einer äußeren Oberfläche derselben befindet;
einen äußeren Laufring (12), der eine äußere Oberfläche und eine innere Eingriffsfläche (16) aufweist, wobei die innere Eingriffsfläche auf einem Abschnitt der äußeren Oberfläche der Kugel (14) positioniert ist und so konturiert ist, dass ihre Form komplementär zu der äußeren Oberfläche der Kugel (14) ist, derart dass die äußere Oberfläche der Kugel (14) gleitfähig und drehbar in Eingriff mit der inneren Eingriffsfläche (16) ist, und wobei die äußere Oberfläche des äußeren Laufrings (12) eine zweite darin befindliche Nut (42) aufweist, wobei die erste und zweite Nut konzentrisch angeordnet sind; **gekennzeichnet durch**
einen ersten Ring (50, 150), der sich gleitfähig in der ersten Nut (40) oder der zweiten Nut (42) befindet, wobei der erste Ring (50, 150) eine im Wesentlichen U-förmige Querschnittsgeometrie aufweist, die **durch** einen ersten Schenkel (60) und einen zweiten Schenkel (62) definiert wird, wobei der erste Ring (50, 150) weiterhin eine Lippe (66) umfasst, die im Wesentlichen senkrecht von dem ersten Schenkel (60) oder dem zweiten Schenkel (62) vorsteht; und
eine Dichtung (30), die bezogen auf die Kugel (14) drehbar ist, wobei die Dichtung (30) einen ersten Rand und einen zweiten Rand aufweist, wobei der erste Rand **durch** den ersten Schenkel (60) und den zweiten Schenkel (62) in dem ersten Ring (50, 150) gehalten wird und der zweite Rand in der anderen der ersten Nut (40) und der zweiten Nut (42) gehalten wird,
wobei der erste Ring (50, 150) und die Dichtung (30) sich im Wesentlichen in Einklang miteinander bewegen und **dadurch** Widerstandskräfte zwischen der Dichtung (30) und der Kugel (14) eliminieren.

2. Kugelförmige Gleitlageranordnung (10) nach Anspruch 1, die weiterhin einen zweiten Ring (50, 150) umfasst, der sich gleitfähig in der anderen der ersten Nut (40) und der zweiten Nut (42) befindet, wobei der zweite Ring (50, 150) eine im Wesentlichen U-förmige Querschnittsgeometrie aufweist, die durch einen dritten Schenkel (60) und einen vierten Schenkel (62) definiert wird;
wobei der zweite Rand der Dichtung (30) in dem zweiten Ring (50, 150) gehalten wird,
wobei der zweite Ring (50, 150) und die Dichtung (30) sich im Wesentlichen in Einklang miteinander bewegen und dadurch Widerstandskräfte zwischen der Dichtung (30) und der Kugel (14) eliminieren.

3. Kugelförmige Gleitlageranordnung (10) nach Anspruch 1, die weiterhin eine schmierende Auskleidung (24) umfasst, die auf der äußeren Oberfläche der Kugel (14) und/oder der inneren Oberfläche des äußeren Laufrings (12) angeordnet ist.

4. Kugelförmige Gleitlageranordnung (10) nach Anspruch 1, wobei der erste Ring (50, 150) gespalten ist.

5. Kugelförmige Gleitlageranordnung (10) nach Anspruch 1, wobei der erste Ring (50, 150) aus einem Polymer gefertigt ist.

6. Kugelförmige Gleitlageranordnung (10) nach Anspruch 1, wobei die Kugel (14) aus Stahl, Aluminium, Titan, Nickel, Kupfer oder Cobalt gefertigt ist.

7. Kugelförmige Gleitlageranordnung (10) nach Anspruch 1, wobei der äußere Laufring (12) aus einem Stahl oder legierten Stahl gefertigt ist.

8. Kugelförmige Gleitlageranordnung (10) nach Anspruch 1, wobei die Dichtung (30) aus einem Material gefertigt ist, das aus der Gruppe bestehend aus Naturkautschuk, Silicon, Nitril, Urethan und Polyurethan ausgewählt ist.

9. Kugelförmige Gleitlageranordnung (10) nach Anspruch 1, wobei die Dichtung (30) gefaltet ist.

10. Verfahren zum Abdichten einer kugelförmigen Gleitlageranordnung (10), das folgende Schritte umfasst:
Bereitstellen eines kugelförmigen Gleitlagers, das einen äußeren Laufring (12) und eine in dem äußeren Laufring (12) angeordnete Kugel (14) aufweist, wobei die Kugel und der äußere Laufring bezogen aufeinander drehbar sind, die Kugel (14) eine erste Nut (40) aufweist und der äußere Laufring (12) jeweils eine zweite Nut (42) aufweist, wobei die erste und zweite Nut konzentrisch angeordnet sind;
Bereitstellen einer Dichtung (30), die einen ersten Rand und einen zweiten Rand aufweist;
Bereitstellen eines ersten Gleitrings (50, 150) in der ersten Nut (40) oder der zweiten Nut (42), wobei der erste Ring (50, 150) eine im Wesentlichen U-förmige Querschnittsgeometrie aufweist, die durch einen ersten Schenkel (60) und einen zweiten Schenkel (62) definiert wird, wobei der erste Ring (50, 150) weiterhin eine Lippe (66) umfasst, die im Wesentlichen senkrecht von dem ersten Schenkel (60) oder dem zweiten Schenkel (62) vorsteht;
Sichern des ersten Rands der Dichtung (30) zwischen dem ersten Schenkel (60) und dem zweiten Schenkel (62) des ersten Gleitrings (50, 150) und Ermöglichen einer Drehung der Dichtung (30) bezogen auf die Kugel (14);
Ermöglichen einer Bewegung des ersten Rings (50, 150) im Wesentlichen in Einklang mit der Dichtung (30) und dadurch Eliminieren von Widerstandskräften zwischen der Dichtung (30) und der Kugel (14); und
Einpassen des zweiten Rands der Dichtung (30) in die andere der ersten Nut (40) und der zweiten Nut (42).

11. Verfahren nach Anspruch 10, wobei der Schritt des Einpassens des zweiten Rands der Dichtung (30) in die andere der ersten Nut und der zweiten Nut umfasst:
Bereitstellen eines zweiten Gleitrings (50, 150) in der anderen der ersten Nut (40) und der zweiten Nut (42), wobei der zweite Ring (50, 150) eine im Wesentlichen U-förmige Querschnittsgeometrie aufweist, die durch einen dritten Schenkel (60) und einen vierten Schenkel (62) definiert wird;
Sichern des zweiten Rands der Dichtung (30) an dem zweiten Gleitring (50, 150) und
Ermöglichen einer Bewegung des zweiten Rings (50, 150) im Wesentlichen in Einklang mit der Dichtung (30) und dadurch Eliminieren von Widerstandskräften zwischen der Dichtung (30) und der Kugel (14).

12. Verfahren nach Anspruch 10, das weiterhin ein Aufbringen einer selbstschmierenden Beschichtungszusammensetzung auf die Kugel (14) und/oder den äußeren Laufring (12) umfasst.

13. Lenkanordnung (70), umfassend:
einen Rahmen (76);
ein Lenkelement (72) und zwei Naben (74), die alle verschwenkbar mit dem Rahmen (76) gekoppelt sind, wobei jede der Naben einen davon abstehenden Querlenker (78) aufweist, wobei ein distales Ende (80) jedes der Querlenker durch eine jeweilige Lenkstange (82) verschwenkbar mit dem Lenkelement (72) gekoppelt ist und jede der Naben (74) einen Kolben (84) aufweist, dessen eines Ende verschwenkbar mit dem Querlenker (78) gekoppelt ist und dessen entgegengesetztes Ende verschwenkbar mit dem Rahmen (76) gekoppelt ist;
eine kugelförmige Gleitlageranordnung (10) nach Anspruch 1, die in entgegengesetzten Enden jeder der Lenkstangen (82) und jedes der Kolben (84) angeordnet ist, zum Bereitstellen der verschwenkbaren Kopplung mit dem Rahmen (76), dem Querlenker (78) und/oder dem Lenkelement (72).

## Revendications

1. Ensemble de palier lisse sphérique (10) comprenant :
une bille (14) ayant une première rainure (40) positionnée dans sa surface externe ;
un chemin de roulement externe (12) ayant une surface externe et une surface de mise en prise interne (16), la surface de mise en prise interne étant positionnée sur une partie de la surface externe de la bille (14) et profilée selon une forme complémentaire à la surface externe de la bille (14) de sorte que la surface externe de la bille (14) est mise en prise de manière coulissante et rotative avec la surface de mise en prise interne (16) et la surface externe du chemin de roulement externe (12) ayant une seconde rainure (42) positionnée à l'intérieur de cette dernière, les première et seconde rainures étant agencées de manière concentrique ; **caractérisé par** :
une première bague (50, 150) positionnée de manière coulissante dans l'une parmi la première rainure (40) et la seconde rainure (42), la première bague (50, 150) ayant une géométrie transversale sensiblement en forme de U définie par une première patte (60) et une deuxième patte (62), la première bague (50, 150) comprenant en outre une lèvre (66) faisant saillie de manière sensiblement perpendiculaire à partir de l'une parmi la première patte (60) et la deuxième patte (62) ; et
un joint d'étanchéité (30) pouvant tourner par rapport à la bille (14), le joint d'étanchéité (30) ayant un premier bord et un second bord, le premier bord étant capturé dans la première bague (50, 150) par la première patte (60) et la deuxième patte (62), et le second bord étant capturé dans l'autre parmi la première rainure (40) et la seconde rainure (42),
la première bague (50, 150) et le joint d'étanchéité (30) se déplaçant sensiblement de concert l'un par rapport à l'autre supprimant les forces résistantes entre le joint d'étanchéité (30) et la bille (14).

2. Ensemble de palier lisse sphérique (10) selon la revendication 1, comprenant en outre une seconde bague (50, 150) positionnée de manière coulissante dans l'autre parmi la première rainure (40) et la seconde rainure (42), la seconde bague (50, 150) ayant une géométrie transversale sensiblement en forme de U définie par une troisième patte (60) et une quatrième patte (62) ;
dans lequel le second bord du joint d'étanchéité (30) est capturé dans la seconde bague (50, 150),
la seconde bague (50, 150) et le joint d'étanchéité (30) se déplaçant sensiblement de concert l'un par rapport à l'autre supprimant les forces résistantes entre le joint d'étanchéité (30) et la bille (14).

3. Ensemble de palier lisse sphérique (10) selon la revendication 1, comprenant en outre un revêtement lubrifiant (24) disposé sur une ou plusieurs parmi la surface externe de la bille (14) et la surface interne du chemin de roulement externe (12).

4. Ensemble de palier lisse sphérique (10) selon la revendication 1, dans lequel la première bague (50, 150) est fendue.

5. Ensemble de palier lisse sphérique (10) selon la revendication 1, dans lequel la première bague (50, 150) est réalisée à partir d'un polymère.

6. Ensemble de palier lisse sphérique (10) selon la revendication 1, dans lequel la bille (14) est réalisée à partir d'acier, d'aluminium, de titane, de nickel, de cuivre ou de cobalt.

7. Ensemble de palier lisse sphérique (10) selon la revendication 1, dans lequel le chemin de roulement externe (12) est réalisé à partir d'un acier ou d'un acier allié.

8. Ensemble de palier lisse sphérique (10) selon la revendication 1, dans lequel le joint d'étanchéité (30) est réalisé à partir d'un matériau choisi dans le groupe comprenant le caoutchouc naturel, la silicone, le nitrile, l'uréthane et le polyuréthane.

9. Ensemble de palier lisse sphérique (10) selon la revendication 1, dans lequel le joint d'étanchéité (30) est plissé.

10. Procédé pour réaliser l'étanchéité d'un ensemble de palier lisse sphérique (10), comprenant les étapes consistant à :
prévoir un palier lisse sphérique ayant un chemin de roulement externe (12) et une bille (14) disposée dans le chemin de roulement externe (12), la bille et le chemin de roulement externe pouvant tourner l'un par rapport à l'autre, la bille (14) ayant une première rainure (40) à l'intérieur de cette dernière, et chaque chemin de roulement externe (12) ayant une seconde rainure (42) à l'intérieur de ce dernier, les première et seconde rainures étant agencées de manière concentrique ;
prévoir un joint d'étanchéité (30) ayant un premier bord et un second bord ;
prévoir une première bague coulissante (50, 150) dans l'une parmi la première rainure (40) et la seconde rainure (42), la première bague (50, 150) ayant une géométrie transversale sensiblement en forme de U définie par une première patte (60) et une deuxième patte (62), la première bague (50, 150) comprenant en outre une lèvre (66) faisant saillie de manière sensiblement perpendiculaire à l'une parmi la première patte (60) et la deuxième patte (62) ;
fixer le premier bord du joint d'étanchéité (30) entre la première patte (60) et la deuxième patte (62) de la première bague coulissante (50, 150) et permettre la rotation du joint d'étanchéité (30) par rapport à la bille (14) ;
permettre le déplacement de la première bague (50, 150) sensiblement de concert avec le joint d'étanchéité (30) supprimant les forces résistantes entre le joint d'étanchéité (30) et la bille (14) ; et
fixer le second bord du joint d'étanchéité (30) à l'autre parmi la première rainure (40) et la seconde rainure (42).

11. Procédé selon la revendication 10, dans lequel l'étape consistant à fixer le second bord du joint d'étanchéité (30) à l'autre parmi la première rainure et la seconde rainure comprend les étapes consistant à :
prévoir une seconde bague coulissante (50, 150) dans l'autre parmi la première rainure (40) et la seconde rainure (42), la seconde bague (50, 150) ayant une géométrie transversale sensiblement en forme de U définie par une troisième patte (60) et une quatrième patte (62) ;
fixer le second bord du joint d'étanchéité (30) à la seconde bague coulissante (50, 150), et
prévoir le déplacement de la seconde bague (50, 150) sensiblement de concert avec le joint d'étanchéité (30) supprimant les forces résistantes entre le joint d'étanchéité (30) et la bille (14).

12. Procédé selon la revendication 10, comprenant en outre l'étape consistant à déposer une composition de revêtement autolubrifiant sur un ou plusieurs parmi la bille (14) et le chemin de roulement externe (12).

13. Ensemble de direction (70) comprenant :
un châssis (76) ;
un élément de direction (72) et deux moyeux (74), tous couplés de manière pivotante au châssis (76), chacun des moyeux ayant un bras de commande (78) faisant saillie de ce dernier, dans lequel une extrémité distale (80) de chacun des bras de commande est couplée de manière pivotante à l'élément de direction (72) par un tirant (82) respectif et chacun des moyeux (74) a un piston (84) avec une extrémité couplée de manière pivotante au bras de commande (78) et une extrémité opposée couplée de manière pivotante au châssis (76) ;
un ensemble de palier lisse sphérique (10) selon la revendication 1, disposé dans des extrémités opposées de chacun des tirants (82) et des pistons (84), pour fournir le couplage pivotant avec au moins l'un parmi le châssis (76), le bras de commande (78) et l'élément de direction (72).
